# EUROPEAN PATENT SPECIFICATION

(11) **EP 3 814 568 B1**
(45) Date of publication and mention of the grant of the patent: **18.10.2023**
(21) Application number: 19761950.5
(22) Date of filing: 25.06.2019
(51) Int. Cl.: D06F 89/02, B25J 9/16

(54) **AUTOMATED SYSTEM FOR FOLDING GARMENTS**
AUTOMATISIERTES SYSTEM ZUM FALTEN VON KLEIDUNG
SYSTÈME AUTOMATISÉ POUR PLIER VÊTEMENTS

(30) Priority: 28.06.2018 IT 201800006785
(43) Date of publication of application: 05.05.2021
(73) Proprietor: Sir S.p.A., 41122 Modena (IT)
(72) Inventor: PASSONI, Davide, 41122 Modena (IT)
(74) Representative: Grana, Daniele
(86) International application number: PCT/IB2019/055348
(87) International publication number: WO 2020/003127

(56) References cited:
- WO-A1-2017/191637
- JP-A- 2011 121 138
- JP-A- 2015 058 999
- US-A1- 2013 346 255

## Description

### Technical Field

The present invention relates to an automated system for folding garments.

### Background Art

With reference to the sector of the industrial production of garments, the use is known along production lines of specific automatic systems for folding garments.

Such systems, in particular, are arranged at the end of a production line for a specific type of garment and are therefore arranged at hardware and software level exclusively for the folding of such specific type of garment.

Therefore, the known types of folding systems, being dedicated to a specific type of garment, are not very versatile and can be applied to different types of garments only after major hardware and software changes. They are therefore difficult to apply in situations which deviate from the application on a production line.

In particular, with reference to the sector of online sale of clothing, the need to quickly package and ship orders is well known and felt.

Each order, in fact, is generally made up of several garments of different type (shirts, sweaters, pants, underwear, etc.) and each garment must necessarily be folded and packaged in a specific container.

Given the extreme variability of the types of products that make up an order, folding is usually carried out manually by dedicated operators, who fold each garment and place it inside the container.

Of course, this folding operation is expensive in terms of time spent and in terms of total overall costs. In fact, in order to keep the overall folding times low, a necessary condition to quickly process orders, it is often necessary to use a considerable number of full-time operators.

Furthermore, the use of automated folding systems of known type would also be considerably expensive.

In fact, this would involve the use of several machines designed for each specific type of garment, with consequently high costs and the consequent need to organize the efficient operation of such machines by one or more operators. Document JP 2011 121138 A discloses a gripping device for gripping clothes and a fabric processing robot including the gripping device.

### Description of the Invention

The main aim of the present invention is to provide an automated system for folding garments which permits handling different types of clothing garments without having to replace/change/retool the folding system itself or its software, and without having to adjust any parameters.

The objects set forth above are achieved by the present automated system for folding garments according to claim 1.

### Brief Description of the Drawings

Other characteristics and advantages of the present invention will be more evident from the description of a preferred, but not exclusive embodiment of an automated system for folding garments, illustrated by way of an indicative, but non-limiting example, in the attached tables of drawings in which:
Figure 1 is a schematic and plan view of a possible system according to the invention;
Figure 2 is a side view of a folding station of the system according to the invention;
Figure 3 is a plan view of the folding station of Figure 2;
Figure 4 is an axonometric view of a picking member that can be used on a robotic arm of the system according to the invention;
Figure 5 is an exploded view of the blades of the picking member of Figure 4;
Figures 6 to 13 illustrate an example of operation of the system according to the invention.

### Embodiments of the Invention

With particular reference to these figures, reference numeral 1 globally indicates an automated system for folding garments.

More specifically, the system 1 according to the invention is able to fold any type of garment V (shirts, pants, underwear, t-shirts, sweaters, coats, jackets, long and short women's dresses, skirts, tops or other) using a single appliance. Furthermore, garments V of any type can be supplied in any order and randomly, by alternating garments of different types, without the need to replace, modify or retool the folding system 1 itself or its software, and without having to manually adjust any parameter.

Therefore, the system 1 according to the invention is able to automate in a simple and immediate manner the distribution logistics of all those companies that carry out the packaging of clothing according to the orders received, such as companies structured for the online sale of clothing.

The system 1 is also able to work in close contact with one or more operators without the need for segregation.

The system 1 comprises a dedicated artificial vision system 2, 3, 4, realized by means of a hardware/software apparatus, suitable for the identification of picking points P (or significant points or, even, points of interest) of the specific garment V to be folded.

In particular, the artificial vision system 2, 3, 4 comprises acquisition means 2 of at least one image of a garment V to be folded.

Preferably, the acquisition means 2 are composed of at least one camera suitably positioned.

In particular, according to a preferred embodiment, the camera 2 used is a camera sensitive to the near-infrared frequency spectrum.

In addition, still according to a preferred embodiment, the artificial vision system 2, 3, 4 comprises at least one halogen lighting device for the illumination of the garment V to be folded.

The use of a camera 2 operating in the near infrared range, together with halogen lighting, makes possible a correct acquisition of images regardless of the color, design and type of fabric of the garment V to be folded.

In particular, the infrared light ensures the acquisition of images with high contrast regardless of color and type of fabric.

Furthermore, the artificial vision system 2, 3, 4 comprises at least one processing unit 3 operatively connected to the acquisition means 2. Advantageously, the processing unit 3 comprises determination means 2, 3, 4, implemented by means of a software procedure, configured to process the at least one acquired image I and to determine;
- at least one picking point P of at least one edge of the garment V to be folded;
- at least one deposition point D of the picked edge of the garment V, in a folded position.

Advantageously, the determination means 4 are also configured to determine at least one intermediate point M between the picking point P and the deposition point D, at which the picked edge must transit to make the fold of at least one portion of the garment V.

Furthermore, according to a preferred embodiment of the system 1, the determination means 4 are configured to determine at least one movement trajectory of the picked edge between the picking point P and the deposition point D.

In particular, the determination means 4 comprise individuation means 5 for individuating the contour C of the garment V to be fold starting from the acquired image I.

The individuation means 5 of the contour C are implemented by means of a special software procedure.

More specifically, according to a preferred embodiment, these individuation means 5 of the contour C are implemented by a software algorithm for the detection of closed-contour stains.

To extract the contour C of a garment V starting from an acquired image I, the parameters of the algorithm must be appropriately set and, above all, a condition of sharp contrast is required which enables the algorithm itself to function correctly.

The artificial vision system 2, 3, 4 obtains such contrast by acquiring the images I through one or more cameras 2 able to operate in the near infrared NIR range. Since such wavelength permits visualizing any fabric as if it were white (whatever its original color) and, at the same time, deleting any pattern (flowers, lines, etc.), a garment of any color and graphic pattern is detected as white on a dark background.

In particular, according to a preferred embodiment, the means 5 of recognition of the contour C are configured to perform at least the following steps
- from the acquired image I, to determine a set of points defining the contour C of the garment;
- to group the determined set of points into several different segments;
- to classify each segment to define different traits (or classes) of the contour of garment V.

Preferably, different sections (or classes) of the contour C are identified when, considering two consecutive segments which are next to each other, the angle between one segment and the other exceeds a predefined angle value. Furthermore, the determination means 4 comprise calculation means 6 configured to calculate at least one picking point P, at least one deposition point D and at least one intermediate point M.

In particular, for each section (or class) of the contour C belonging to a specific class, a point of interest (or remarkable point) is defined that corresponds to a possible picking point P.

The calculation means 6 are configured to select the best picking point P out of all the points of interest determined according to the specific garment V to be folded and according to the type of folding to be carried out.

For example, such picking points P can be located at the contours of the cuffs, of the shoulder and of the sides of the waist in a shirt, or of the ankles and of the sides of the waist in a pair of trousers.

The identification of the picking points P can be made whatever the color, the design, the fabric, the size, the shape (fringed, jagged, perforated, etc.) of the garment V under examination, making the artificial vision system 2, 3, 4 flexible and universal.

The system 1 also comprises at least one robotic arm 7 provided with at least one picking member 8 and operatively connected to the processing unit 3. Advantageously, the system 1 comprises driving means 9 of the robotic arm 7, configured to drive the picking member 8 depending on the at least one determined picking point P, on the at least one deposition point D and on the at least one intermediate point M, until the garment V is folded completely.

In particular, the driving means 9 must drive the picking member 8 of the robotic arm 7 from the picking point P to the deposition point D, passing through the intermediate point M.

A predefined height also corresponds to the intermediate point M.

The picking member 8, passing through such intermediate point M, at such predefined height, before heading towards the deposition point D, performs the predefined folding of the garment V.

The driving means 9 can be implemented by means of an appropriate software procedure. For example, this software procedure can be performed by the processing unit 3.

Specifically, the driving means 9 are configured to drive the picking member 8 to perform at least the following steps:
- grasping one edge of the garment V at a picking point P;
- moving the grasped edge between the picking point P and a deposition point D, following a predefined movement trajectory depending on an intermediate point M;
- depositing the picked edge at the deposition point D.

In particular, if the garment V needs several folding operations, the aforementioned steps of grasping, moving and depositing are repeated iteratively for different determined picking points P, deposition points D and intermediate points M, until the garment V is folded.

As highlighted above, the picking points P are points used by the robotic arms 7 to grasp and fold a garment V.

For each garment V, the robotic arms 7 can perform multiple folding steps and, during each step, each of the robotic arms 7 must know the picking points P to complete folding.

According to a preferred embodiment, the system 1 comprises four robotic arms 6.

In this case, two of the robotic arms 7 can know two distinct picking points P in order to grasp and hold the garment V during folding, while one or both of the remaining two robotic arms 7 must know three different points: a picking point P of departure, at which the garment V must be picked, an intermediate point M, to which the picking member 8 must be moved for correct folding, and a deposit point D, at which the picked portion of the garment V must be deposited.

The system 1 usefully comprises at least one supporting surface 10 of the garment V to be folded.

The acquisition means 2 are configured to acquire at least one image of the positioned garment (which was laid beforehand) on such supporting surface 10. The system 1 preferably comprises identification means 11 of the type of the garment V to be folded (shirts, trousers, underwear, T-shirts, jumpers, coats, jackets, long and short women's dresses, skirts, tops and the like).

In particular, the identification means 11 comprise at least one reader device configured to read an identification code on the garment which is adapted to identify the type of the specific garment.

The identification means 11 or other identification means may also be used to read an identification code on a container B for the packaging of the garment V, once folded.

Following the reading of such identification code of the container B, the system 1 is able to identify the type and the specific dimensions of the container B used.

By way of example, the identification means 11 can be composed of a barcode scanner or an RFID reader. However, the use of different types of identification means 11 cannot be ruled out, and neither can the manual insertion of the type of garment V and/or container B by an operator and by means of a special terminal of the system 1.

Due to the high variability, comprising dimensional variability, of the garments V to be folded, the artificial vision system 2, 3, 4 performs a parameterization of the movements of each robotic arm 7, so as to adapt them to different sizes and shapes.

For each folding phase (e.g. first the left sleeve, then the right sleeve and so on), the robotic arm 7 will be automatically and instantaneously informed about the picking point P of the edge of the garment V, about the aerial movement trajectory to be performed to iron and stretch it sufficiently, about the deposition point D of the edge itself in the folded position.

It is important to notice that the system 1 is also able to operate in the face of considerable variations in the relative position of the parts of the incoming garment V, such as translations, rotations, more open or more closed sleeves, sleeves with the elbow more or less folded, etc.

For the correct operation of the system 1, in particular of the artificial vision system 2, 3, 4, it is in fact sufficient to carry out the preliminary positioning, albeit rough, of the garment V in a more or less extended position. The driving means 9 of each robotic arm 7 are subsequently parameterized on the basis of the information received from the artificial vision system 2, 3, 4.

Each robotic arm 7 therefore has in its memory a basic folding program for each family, which is scaled, rotated and readjusted from time to time according to the local conditions of the current garment V, on the basis of the information received from the artificial vision system 2, 3, 4 itself.

Furthermore, the folding phases may be fewer or more numerous depending on the dimensions of the container B in which the garment V will be placed and this is also a datum which the operator can provide at input through the identification means 11. The robotic arm 7 will, for example, fold the garment V several times on itself if the container B is very small.

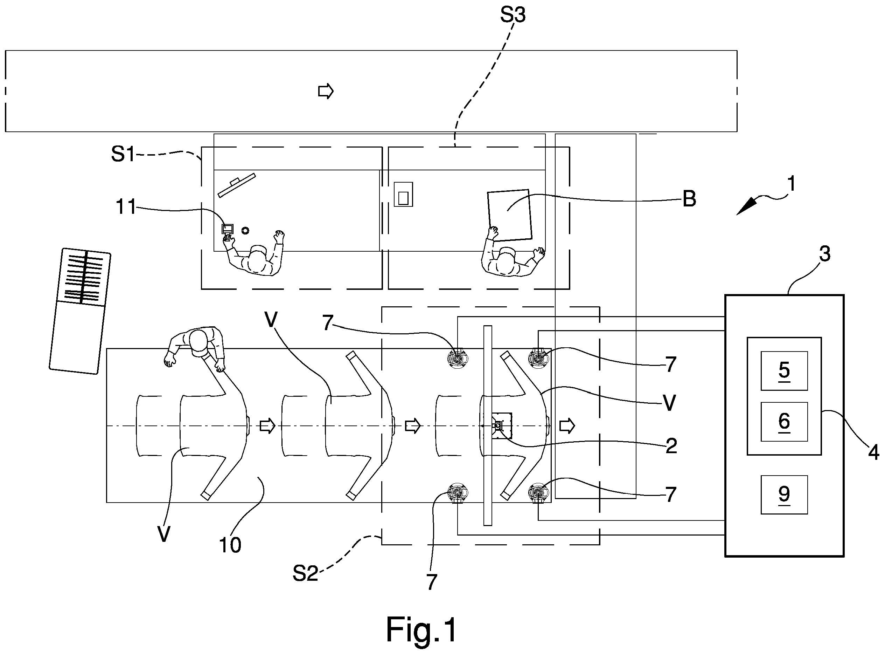

As shown, for example, in Figure 1, according to a preferred embodiment, the system 1 provides for the use of three different operating stations, S1, S2 and S3.

Specifically, the system 1 comprises a first setting station S1 provided with the identification means 11.

In such a setting station S1, an operator reads the identification codes of the garments V to be folded using the identification means 11, thereby identifying the specific type of each specific garment V to be folded.

Again in this setting station S1, the operator can read the identification codes of each of the containers B used for the packaging of the folded garments V, thereby identifying the specific type and dimensions of each specific container B used.

The system 1 also comprises at least one folding station S2 provided with the supporting surface 10, the acquisition means 2 and the at least one robotic arm 7.

The folding station S2 preferably comprises a plurality of robotic arms 7 arranged spaced apart from each other in the proximity of the supporting surface 10 and configured to operate in conjunction with each other for folding each garment V.

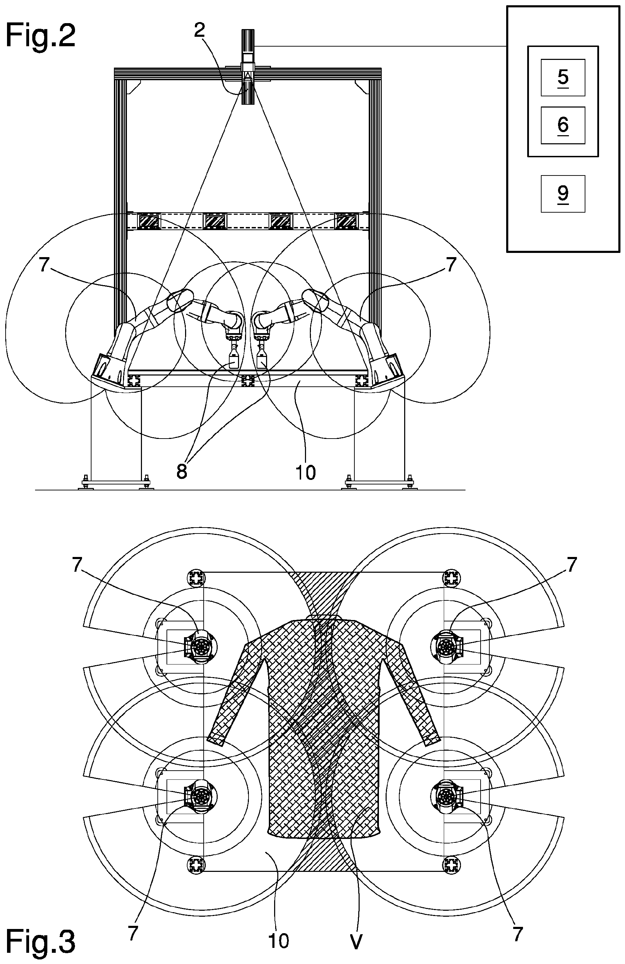

In particular, according to a preferred embodiment, shown in Figures 1, 2 and 3, the folding station S2 comprises two pairs of the robotic arms 7 arranged in the proximity of opposed sides of the supporting surface 10.

Advantageously, the use of more than one robotic arm 7 permits overcoming the limits due to reachability, i.e., it permits obtaining a wider working area adapted to fold garments of considerable size and dimensions.

The supporting surface 10 of the folding station S2 can usefully be made up of a supply line of the garments to be folded. An operator can then position and lay the garments V to be folded on this supply line 10.

For example, such supply line 10 may consist of a conveyor belt.

Alternatively, the supporting surface 10 of the folding station S2 can be made up of a table adapted to accommodate the garments V to be folded laid on it.

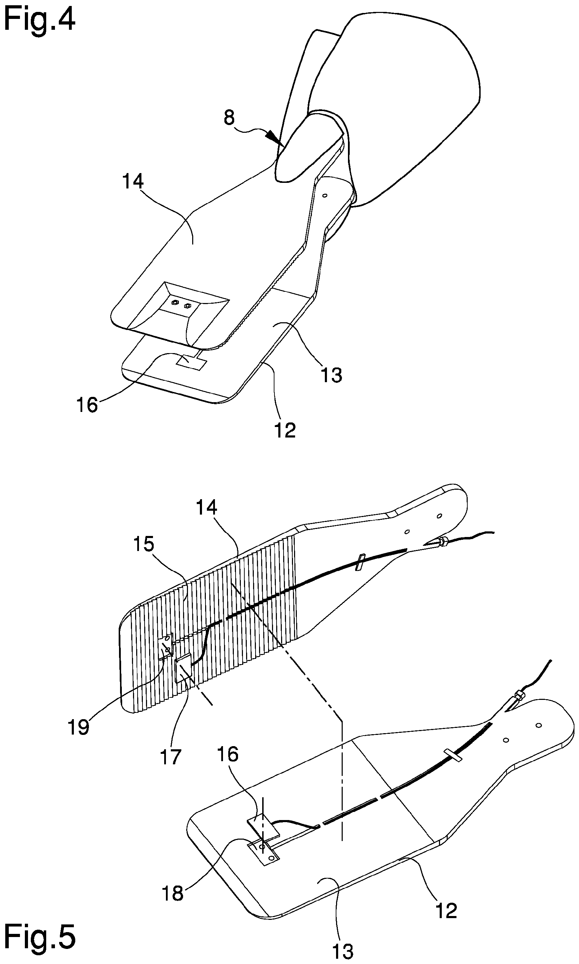

Still according to the possible embodiment shown in Figure 1, the system 1 comprises a packing station S3 of the folded garment V. At this packing station S3, the folded garments V are inserted by the operator into special containers B. Advantageously, as shown in detail in Figures 4 and 5, the picking member 8 used by the robotic arms 7 is a blade picking member 8 and comprises:
- a first blade 12 provided with a smooth surface 13 which is adapted to fit and slide under the garment V without crinkling or damaging it; and
- a second blade 14, opposed to the first blade 12, and provided with a knurled surface 15, adapted to grasp the garment correctly in order to finish the fold.

The knurled surface 15 of the second blade 14 is preferably of the type of a saw-tooth shaped surface.

The first blade 12 and the second blade 14 are preferably made of plastic material.

Therefore, the system 1 provides for the use of blade picking members 8 in plastic material, which can insert themselves and slip under each garment V without crinkling or damaging it thanks to the smooth surface 13.

At the same time, the picking members 8 used can correctly grasp the garment V in order to finish the fold, thanks to the knurled surface 15 with saw-tooth shaping.

In particular, the presence of a knurled surface 15 in the picking member 8 permits significantly increasing the grip during the handling phase of garment V, especially for heavy-duty garments, and thus ensures a firm grip during the entire folding process.

The picking member 8 used on the robotic arms 7 usefully comprises at least one detection sensor 16, 17 which is adapted to detect the presence of the garment V between the first blade 12 and the second blade 14.

In particular, according to a preferred embodiment, at least one of the first blade 12 and the second blade 14 comprises at least one housing seat 18, 19 of such at least one detection sensor 16, 17, made at a portion of the smooth surface 13 or of the knurled surface 15.

With reference to the specific and preferred embodiment illustrated in Figures 4 and 5, both the smooth surface 13 and the knurled surface 15 are provided with respective housing seats 17 and 18, inside which respective detection sensors 16 and 17 are housed.

Such detection sensors 16, 17 make it possible to verify the presence of the fabric of the garment I inside the picking member 8, with the aim of verifying the correctness of the coordinates returned by the artificial vision system 2, 3, 4 and, if necessary, making appropriate local picking corrections.

Below is an example of the folding method carried out by means of the folding system 1 and with specific reference to a shirt S.

Please notice that steps similar to those described below are applicable to garments of different types.

First of all, at the setting station S1, by means of the identification means 11, an operator reads a barcode present on the shirt S. This way, the system 1 classifies the generic garment V as a shirt.

The operator then places the shirt S on the supporting surface 10 of the folding station S2.

Once arranged and suitably positioned inside the field of vision of the camera 2, the artificial vision system 2, 3, 4 acquires one image I of the shirt S. Such acquisition is carried out in the near-infrared field in order to increase the contrast between the shirt S and the background (consisting of the supporting surface 10).

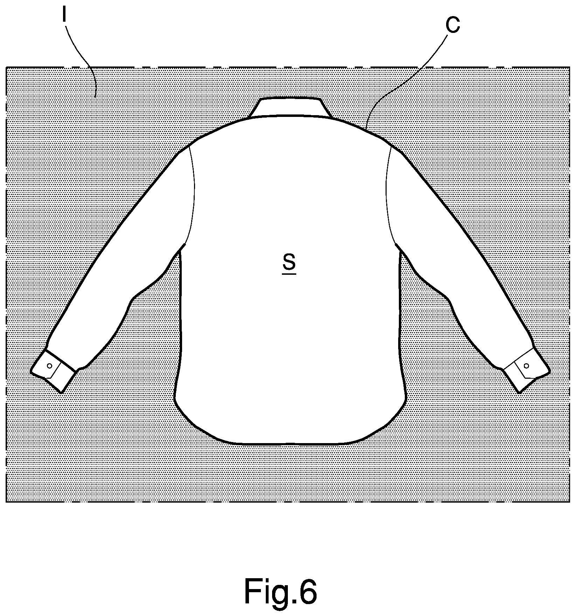

This acquired image I is illustrated in figure 6.

Once the image I has been acquired, the system 1 determines the contour C of the shirt S by means of the individuation means 5 which, specifically, carry out the following steps:
- determining a series of points defining the contour of the shirt S;
- grouping the series of points into several different segments;
- classifying the segments to define different sections (or classes) of the shirt S.

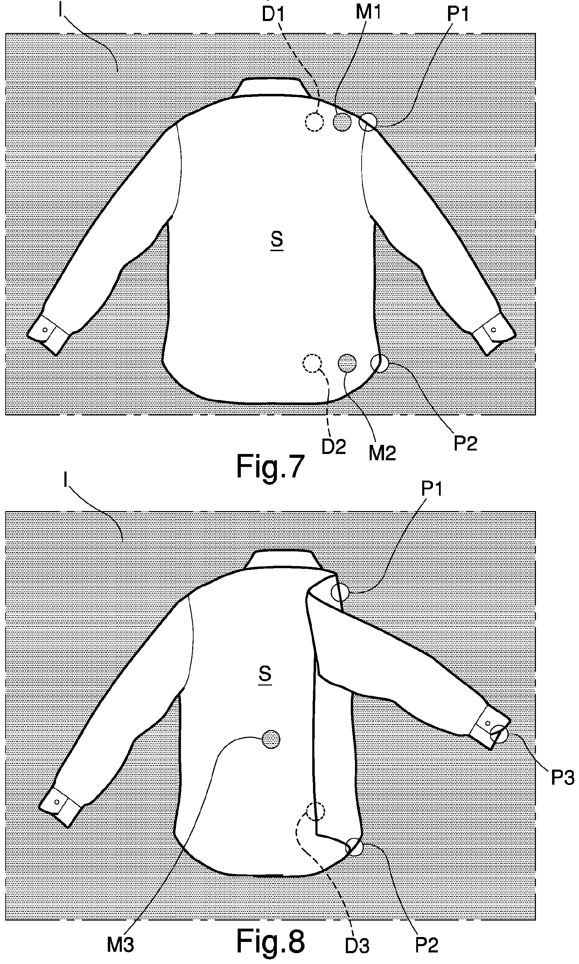

Afterwards, as shown in Figures 7 and 8 below, the system 1 folds the right side of the sleeve S by means of the robotic arms 7.

For correct folding, the shirt S must be grasped at two distinct points, the shoulder and the body of the shirt, before folding it towards the left side.

As shown in figure 7, the determination means 4 determine a first picking point P1 at the shoulder and a second picking point P2 at the lower part of the body of the shirt S.

Furthermore, the determination means 4 determine a first deposition point D1, at which the edge of the picked-up shoulder must be deposited, and a second deposition point D2, at which the edge of the body of the picked-up shirt S must be deposited.

The determination means 4 also determine a first intermediate point M1, located between the first picking point P1 and the first deposition point D1, and a second intermediate point M2, located between the second picking point P2 and the second deposition point D2. The first and the second intermediate points M1, M2 correspond to the points where the fold must be made and serve to ensure the correct size of the fold itself.

In particular, the points P1 and P2 of the body of the shirt S are determined by considering the significant points (or points of interest) of the correct sections (or classes) of the contour C. This way, a straight line can be traced and points P1 and P2 can be identified by calculating the intersection between the straight line and these lines of the contour C.

The deposition points D1 and D2 are calculated by exploiting the distance between the longitudinal axis of the shirt S and each pickup point P1 and P2. Therefore, considering only two thirds of the distance, the point of arrival of the first fold is established. According to this process, any type of shirt S can be parameterized.

The two deposition points D1 and D2 are on a line parallel to the longitudinal axis. The objective is to achieve the same width at the top and bottom of the shirt S.

Each intermediate point M1 and M2 is positioned midway between the corresponding end point and the start point.

In a subsequent phase, shown in Figure 8, the picking points P1 and P2 are again calculated on the shoulder and on the body of the shirt S.

Furthermore, an additional picking point P3 is determined at the contour of the sleeve cuff of the shirt S.

The intermediate point M3 and the deposition point D3 are determined in such a way as to allow the correct positioning of the sleeve of the shirt S, by moving the picked cuff at the picking point P3.

The shirt S is picked by two respective robotic arms 7 at the picking points P1 and P2 in order to hold it in position during the folding of the sleeve.

In this case, for the sleeve cuff, the extreme points are determined and a straight line is therefore calculated which intersects the midpoint of the cuff. The intermediate point M3 is calculated as the intersection between the longitudinal axis and the line passing through the midpoint of the cuff.

The deposition point D3 is positioned on the vertical axis of the shoulder. To prevent the end point from being too low, the length of the sleeve is taken into account.

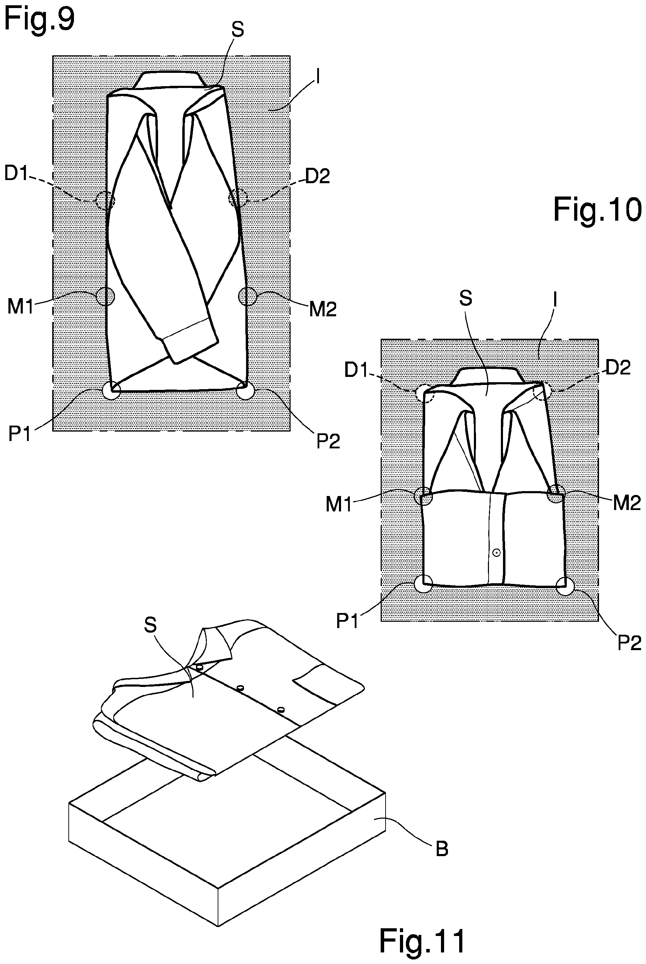

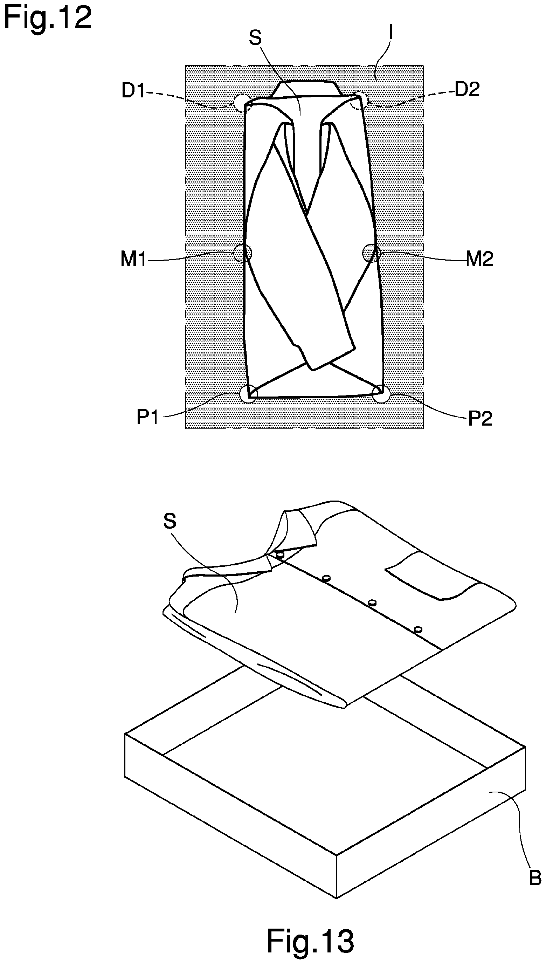

The system 1 then folds the left side of the shirt S in the same way as described above for the right side. The result of these operations is shown in Figures 9 and 12.

Prior to the last folding phase, a comparison is made between the length of the shirt S and the container B in which the shirt is to be packed.

Different folds are shown in figures 9, 10, 11, 12 and 13, depending on the different dimensions of the container B.

In particular, the length of the shirt S is calculated as the distance between the upper and lower points.

If the size of the container B is less than half of the long side, then two folding operations are required. This is shown in Figures 9, 10 and 11.

If, on the other hand, the size of the container is greater than or equal to half of the long side, then a single folding operation may be carried out. This is shown in Figures 12 and 13.

The various points of interest are processed by the determination means 4 in the same way as in the previous phases.

In particular, if the number of final folds is one, the intermediate points are calculated as the intersection between the longitudinal axis and the contour segment, otherwise a new intermediate axis must be calculated. In particular, if the length of the shirt can be divided into three parts, the intermediate axis is parallel to the longitudinal axis but shifted one sixth downwards.

It has in practice been ascertained that the described invention achieves the intended objects.

In particular, the fact is underlined that the automated system according to the invention makes it possible to handle different types of clothing garments without having to replace, modify or retool the folding system itself or its software, and without having to adjust any parameters.

In practice, therefore, the possibility of using the system according to the invention even in the case of a completely randomized supply of the garments to be folded, exceeds the limits of current folding machines, generally dedicated to a specific family of garments.

## Claims

1. Automated system (1) for folding garments, comprising:
- acquisition means (2) of at least one image (I) of a garment (V) to be folded;
- at least one processing unit (3) operatively connected to said acquisition means (2) and comprising determination means (2, 3, 4) configured to process said at least one acquired image (I) and to determine at least one picking point (P) of at least one edge of said garment (V) and at least one deposition point (D) of said picked edge in a folded position;
- at least one robotic arm (7) provided with at least one picking member (8) and operatively connected to said processing unit (3);
- driving means (9) of said robotic arm (7) configured to drive said picking member (8) depending on said at least one picking point (P) and on said at least one deposition point (D);
**characterized in that** said determination means (2, 3, 4) are configured to determine at least one movement trajectory of said picked edge, said driving means (9) being configured to drive said picking member (8) between said at least one picking point (P) and said at least one deposition point (D) following said movement trajectory.

2. System (1) according to claim 1, **characterized by** the fact that said determination means (2, 3, 4) are configured to determine at least one intermediate point (M) between said picking point (P) and said deposition point (D).

3. System (1) according to one or more of the preceding claims, **characterized by** the fact that said determination means (2, 3, 4) comprise individuation means (5) for individuating the contour (C) of said garment (V) starting from said at least one acquired image (I).

4. System (1) according to one or more of the preceding claims, **characterized by** the fact that said driving means (9) are configured to perform at least the following steps:
- grasping one edge of said garment (V) at said picking point (P);
- moving said grasped edge passing through said intermediate point (M);
- depositing said edge at said deposition point (D).

5. System (1) according to claim 4, **characterized by** the fact that said steps of grasping, moving and depositing are repeated iteratively for different picking points (P), intermediate points (M) and deposition points (D), until said garment (V) is folded.

6. System (1) according to one or more of the preceding claims, **characterized by** the fact that it comprises at least one supporting surface (10) of said garment (V) to be folded, said acquisition means (2) being configured to acquire at least one image (I) of said garment (V) positioned on said supporting surface (10).

7. System (1) according to one or more of the preceding claims, **characterized by** the fact that said acquisition means (2) for acquiring at least one image (I) comprise at least one camera (2).

8. System (1) according to one or more of the preceding claims, **characterized by** the fact that it comprises identification means (11) of the type of said garment (V) to be folded and/or of the type of a container (B) for the packing of said garment (V).

9. System (1) according to claim 8, **characterized by** the fact that said identification means (11) comprise at least one reader device configured to read an identification code on said garment (V) and/or an identification code on said container (B).

10. System (1) according to one or more of the preceding claims, **characterized by** the fact that it comprises a setting station (S1) provided with said identification means (11).

11. System (1) according to one or more of the preceding claims, **characterized by** the fact that it comprises at least one folding station (S2) provided with said supporting surface (10), said acquisition means (2) and said at least one robotic arm (7).

12. System (1) according to one or more of the preceding claims, **characterized by** the fact that said folding station (S2) comprises a plurality of robotic arms (7) arranged spaced apart from each other in the proximity of said supporting surface (10) and configured to operate in conjunction with each other for folding said garment (V).

13. System (1) according to claim 12, **characterized by** the fact that said folding station (S2) comprises two pairs of said robotic arms (7) arranged in the proximity of opposed sides of said supporting surface (10).

14. System (1) according to one or more of the preceding claims, **characterized by** the fact that said picking member (8) is a blade picking member (8) and comprises a first blade (12) provided with a smooth surface (13) which is adapted to fit and slide under the garment (V) without crinkling or damaging it, and a second blade (14), opposed to said first blade (12), and provided with a knurled surface (15).

15. System (1) according to claim 14, **characterized by** the fact that said picking member (8) comprises at least one detection sensor (16, 17) for detecting the presence of said garment (V) between said first blade (12) and said second blade (14) arranged at a portion of said smooth surface (13) or of said knurled surface (15).

## Patentansprüche

1. Automatisiertes System (1) zum Falten von Kleidungsstücken, umfassend:
- Erfassungsmittel (2) für mindestens ein Bild (I) eines zu faltenden Kleidungsstücks (V);
- mindestens eine Verarbeitungseinheit (3), die mit den Erfassungsmitteln (2) in Wirkverbindung steht und Bestimmungsmittel (2, 3, 4) umfasst, die ausgebildet sind, um das mindestens eine erfasste Bild (I) zu verarbeiten und mindestens einen Aufnahmepunkt (P) mindestens einer Kante des Kleidungsstücks (V) und mindestens einen Ablagepunkt (D) der aufgenommenen Kante in einer gefalteten Position zu bestimmen,
- mindestens einen Roboterarm (7), der mit mindestens einem Aufnahmeelement (8) versehen ist und in Wirkverbindung mit der Verarbeitungseinheit (3) steht;
- Antriebsmittel (9) des Roboterarms (7), die ausgebildet sind, um das Aufnahmeelement (8) in Abhängigkeit von dem mindestens einen Aufnahmepunkt (P) und von dem mindestens einen Ablagepunkt (D) anzutreiben;
**dadurch gekennzeichnet, dass** die Bestimmungsmittel (2, 3, 4) ausgebildet sind, um mindestens eine Bewegungsbahn der aufgenommenen Kante zu bestimmen, wobei die Antriebsmittel (9) ausgebildet sind, um das Aufnahmeelement (8) zwischen dem mindestens einen Aufnahmepunkt (P) und dem mindestens einen Ablagepunkt (D) der Bewegungsbahn folgend anzutreiben.

2. System (1) nach Anspruch 1, **dadurch gekennzeichnet, dass** die Bestimmungsmittel (2, 3, 4) ausgebildet sind, um mindestens einen Zwischenpunkt (M) zwischen dem Aufnahmepunkt (P) und dem Ablagepunkt (D) zu bestimmen.

3. System (1) nach einem oder mehreren der vorhergehenden Ansprüche, **dadurch gekennzeichnet, dass** die Bestimmungsmittel (2, 3, 4) Individualisierungsmittel (5) zum Individualisieren der Kontur (C) des Kleidungsstücks (V) ausgehend von dem mindestens einen erfassten Bild (I) umfassen.

4. System (1) nach einem oder mehreren der vorhergehenden Ansprüche, **dadurch gekennzeichnet, dass** die Antriebsmittel (9) ausgebildet sind, um mindestens die folgenden Schritte auszuführen:
- Ergreifen einer Kante des Kleidungsstücks (V) an dem Aufnahmepunkt (P);
- Bewegen der ergriffenen Kante durch den Zwischenpunkt (M);
- Ablegen der Kante an dem Ablagepunkt (D).

5. System (1) nach Anspruch 4, **dadurch gekennzeichnet, dass** die Schritte des Ergreifens, Bewegens und Ablegens für verschiedene Aufnahmepunkte (P), Zwischenpunkte (M) und Ablagepunkte (D) iterativ wiederholt werden, bis das Kleidungsstück (V) gefaltet ist.

6. System (1) nach einem oder mehreren der vorhergehenden Ansprüche, **dadurch gekennzeichnet, dass** es mindestens eine Auflagefläche (10) für das zu faltende Kleidungsstück (V) umfasst, wobei die Erfassungsmittel (2) ausgebildet sind, um mindestens ein Bild (I) des auf der Auflagefläche (10) positionierten Kleidungsstücks (V) zu erfassen.

7. System (1) nach einem oder mehreren der vorhergehenden Ansprüche, **dadurch gekennzeichnet, dass** die Erfassungsmittel (2) zum Erfassen mindestens eines Bildes (I) mindestens eine Kamera (2) aufweisen.

8. System (1) nach einem oder mehreren der vorhergehenden Ansprüche, **dadurch gekennzeichnet, dass** es Identifizierungsmittel (11) für den Typ des zu faltenden Kleidungsstücks (V) und/oder den Typs eines Behältnisses (B) für das Verpacken des Kleidungsstücks (V) umfasst.

9. System (1) nach Anspruch 8, **dadurch gekennzeichnet, dass** die Identifizierungsmittel (11) mindestens eine Lesevorrichtung umfassen, die ausgebildet ist, um einen Identifikationscode auf dem Kleidungsstück (V) und/oder einen Identifikationscode auf dem Behältnis (B) zu lesen.

10. System (1) nach einem oder mehreren der vorhergehenden Ansprüche, **dadurch gekennzeichnet, dass** es eine Einstellstation (S1) umfasst, die mit den Identifizierungsmitteln (11) versehen ist.

11. System (1) nach einem oder mehreren der vorhergehenden Ansprüche, **dadurch gekennzeichnet, dass** es mindestens eine Faltstation (S2) umfasst, die mit der Auflagefläche (10), den Erfassungsmitteln (2) und dem mindestens einen Roboterarm (7) versehen ist.

12. System (1) nach einem oder mehreren der vorhergehenden Ansprüche, **dadurch gekennzeichnet, dass** die Faltstation (S2) eine Vielzahl von Roboterarmen (7) umfasst, die voneinander beabstandet in der Nähe der Auflagefläche (10) angeordnet sind und ausgebildet sind, um miteinander zum Falten des Kleidungsstücks (V) zusammenzuwirken.

13. System (1) nach Anspruch 12, **dadurch gekennzeichnet, dass** die Faltstation (S2) zwei Paare der Roboterarme (7) umfasst, die in der Nähe von gegenüberliegenden Seiten der Auflagefläche (10) angeordnet sind.

14. System (1) nach einem oder mehreren der vorhergehenden Ansprüche, **dadurch gekennzeichnet, dass** das Aufnahmeelement (8) ein Klingen-Aufnahmeelement (8) ist und eine erste Klinge (12) umfasst, die mit einer glatten Oberfläche (13) versehen ist, die so angepasst ist, dass sie unter das Kleidungsstück (V) passt und darunter gleitet, ohne es zu knittern oder zu beschädigen, und eine zweite Klinge (14), die der ersten Klinge (12) gegenüberliegt und mit einer gerändelten Oberfläche (15) versehen ist.

15. System (1) nach Anspruch 14, **dadurch gekennzeichnet, dass** das Aufnahmeelement (8) mindestens einen Detektionssensor (16, 17) zum Detektieren des Vorhandenseins des Kleidungsstücks (V) zwischen der ersten Klinge (12) und der zweiten Klinge (14) umfasst, der an einem Abschnitt der glatten Oberfläche (13) oder der gerändelten Oberfläche (15) angeordnet ist.

## Revendications

1. - Système automatisé (1) pour plier des vêtements, comprenant :
- des moyens d'acquisition (2) d'au moins une image (1) d'un vêtement (V) à plier ;
- au moins une unité de traitement (3) reliée de manière fonctionnelle auxdits moyens d'acquisition (2) et comprenant des moyens de détermination (2, 3, 4) configurés pour traiter ladite au moins une image acquise (I) et pour déterminer au moins un point de saisie (P) d'au moins un bord dudit vêtement (V) et au moins un point de dépôt (D) dudit bord saisi dans une position pliée ;
- au moins un bras robotique (7) comportant au moins un élément de saisie (8) et relié de manière fonctionnelle à ladite unité de traitement (3) ;
- des moyens d'entraînement (9) dudit bras robotique (7) configurés pour entraîner ledit élément de saisie (8) en fonction dudit au moins un point de saisie (P) et dudit au moins un point de dépôt (D) ;
**caractérisé par le fait que** lesdits moyens de détermination (2, 3, 4) sont configurés pour déterminer au moins une trajectoire de déplacement dudit bord saisi, lesdits moyens d'entraînement (9) étant configurés pour entraîner ledit élément de saisie (8) entre ledit au moins un point de saisie (P) et ledit au moins un point de dépôt (D) en suivant ladite trajectoire de déplacement.

2. - Système (1) selon la revendication 1, **caractérisé par le fait que** lesdits moyens de détermination (2, 3, 4) sont configurés pour déterminer au moins un point intermédiaire (M) entre ledit point de saisie (P) et ledit point de dépôt (D).

3. - Système (1) selon une ou plusieurs des revendications précédentes, **caractérisé par le fait que** lesdits moyens de détermination (2, 3, 4) comprennent des moyens d'individualisation (5) pour individualiser le contour (C) dudit vêtement (V) à partir de ladite au moins une image acquise (I).

4. - Système (1) selon une ou plusieurs des revendications précédentes, **caractérisé par le fait que** lesdits moyens d'entraînement (9) sont configurés pour effectuer au moins les étapes suivantes :
- prendre un bord dudit vêtement (V) audit point de saisie (P) ;
- déplacer ledit bord pris en passant par ledit point intermédiaire (M) ;
- déposer ledit bord audit point de dépôt (D).

5. - Système (1) selon la revendication 4, **caractérisé par le fait que** lesdites étapes de prise, de déplacement et de dépôt sont répétées de manière itérative pour différents points de saisie (P), points intermédiaires (M) et points de dépôt (D), jusqu'à ce que ledit vêtement (V) soit plié.

6. - Système (1) selon une ou plusieurs des revendications précédentes, **caractérisé par le fait qu'**il comprend au moins une surface de support (10) dudit vêtement (V) à plier, lesdits moyens d'acquisition (2) étant configurés pour acquérir au moins une image (I) dudit vêtement (V) positionné sur ladite surface de support (10).

7. - Système (1) selon une ou plusieurs des revendications précédentes, **caractérisé par le fait que** lesdits moyens d'acquisition (2) pour acquérir au moins une image (1) comprennent au moins une caméra (2).

8. - Système (1) selon une ou plusieurs des revendications précédentes, **caractérisé par le fait qu'**il comprend des moyens d'identification (11) du type dudit vêtement (V) à plier et/ou du type d'un contenant (B) pour l'emballage dudit vêtement (V).

9. - Système (1) selon la revendication 8, **caractérisé par le fait que** lesdits moyens d'identification (11) comprennent au moins un dispositif de lecture configuré pour lire un code d'identification sur ledit vêtement (V) et/ou un code d'identification sur ledit contenant (B).

10. - Système (1) selon une ou plusieurs des revendications précédentes, **caractérisé par le fait qu'**il comprend un poste de réglage (S1) comportant lesdits moyens d'identification (11).

11. - Système (1) selon une ou plusieurs des revendications précédentes, **caractérisé par le fait qu'**il comprend au moins un poste de pliage (S2) comportant ladite surface de support (10), lesdits moyens d'acquisition (2) et ledit au moins un bras robotique (7).

12. - Système (1) selon une ou plusieurs des revendications précédentes, **caractérisé par le fait que** ledit poste de pliage (S2) comprend une pluralité de bras robotiques (7) disposés à distance les uns des autres à proximité de ladite surface de support (10) et configurés pour fonctionner conjointement les uns avec les autres pour plier ledit vêtement (V).

13. - Système (1) selon la revendication 12, **caractérisé par le fait que** ledit poste de pliage (S2) comprend deux paires desdits bras robotiques (7) disposées à proximité de côtés opposés de ladite surface de support (10) .

14. - Système (1) selon une ou plusieurs des revendications précédentes, **caractérisé par le fait que** ledit élément de saisie (8) est un élément de saisie à lames (8) et comprend une première lame (12) comportant une surface lisse (13) qui est agencée pour s'adapter et glisser sous le vêtement (V) sans le froisser ni l'abîmer, et une seconde lame (14) opposée à ladite première lame (12) et comportant une surface moletée (15).

15. - Système (1) selon la revendication 14, **caractérisé par le fait que** ledit élément de saisie (8) comprend au moins un capteur de détection (16, 17) pour détecter la présence dudit vêtement (V) entre ladite première lame (12) et ladite seconde lame (14), disposé à une partie de ladite surface lisse (13) ou de ladite surface moletée (15).
